# EUROPÄISCHE PATENTANMELDUNG

(11) **EP 4 632 320 A1**
(43) Veröffentlichungstag der Anmeldung: **15.10.2025**
(21) Anmeldenummer: 24169800.0
(22) Anmeldetag: 11.04.2024
(51) Int. Cl.: G01B 21/26

(54) **VERFAHREN ZUM ERMITTELN EINER AUSRICHTUNG EINES FAHRZEUGS**

(71) Anmelder: Hella Gutmann Solutions GmbH, 79241 Ihringen (DE)
(72) Erfinder: Driewer, Adrian, 79241 Ihringen (DE); Bittante, Nicolas, 79241 Ihringen (DE)
(74) Vertreter: Pfenning, Meinig & Partner mbB

(57) **Zusammenfassung**

Die vorliegende Erfindung betrifft ein Verfahren zum Ermitteln einer Ausrichtung eines Fahrzeugs, insbesondere zum Ermitteln einer Ausrichtung eines Fahrzeugs in Bezug auf eine Fahrzeug-Kalibrationsvorrichtung. Weiter betrifft die vorliegende Erfindung ein System zum Ermitteln einer Ausrichtung eines Fahrzeugs.

## Beschreibung

Die vorliegende Erfindung betrifft ein Verfahren zum Ermitteln einer Ausrichtung eines Fahrzeugs, insbesondere zum Ermitteln einer Ausrichtung eines Fahrzeugs in Bezug auf eine Fahrzeug-Kalibrationsvorrichtung. Weiter betrifft die vorliegende Erfindung ein System zum Ermitteln einer Ausrichtung eines Fahrzeugs.

Zur Kalibration eines Fahrerassistenzsystems, insbesondere ein Advanced Driver-Assistance System, ADAS, (z.B. Kamera, Radar, Lidar), wird in den meisten Fällen eine entsprechende Fahrzeug-Kalibrationsvorrichtung nach den Vorgaben des Fahrzeugherstellers in Bezug auf das Fahrzeug positioniert. Die Fahrzeug-Kalibrationsvorrichtung kann z.B. ein Testtarget vor dem Fahrzeug zur Kalibration der Frontkamera oder ein Radartrichter seitlich hinter dem Fahrzeug sein.

Die Genauigkeit der Kalibration hängt bei den meisten Systemen auch von der Genauigkeit der Positionierung der Kalibrationsvorrichtung relativ zum Fahrzeug ab. Somit sind die Positionierung und Ausrichtung der Kalibrationsvorrichtung relativ zum Fahrzeug und das Messen der Position und Ausrichtung des Fahrzeugs für eine genaue Kalibrierung besonders relevant.

Im Stand der Technik werden zur Positions- und Ausrichtungsbestimmung beispielsweise kamerabasierte 3D-Erkennung von am Fahrzeug angebrachten Targets oder CCD-Sensoren in Verbindung mit Laser-Distanzsensoren vorgeschlagen. Die Messungen geben dem Anwender Auskunft über den Abstand und Winkel zum Fahrzeug (bzw. der Fahrachse) und unterstützen beim Ausrichten des Fahrzeugs in Bezug auf die Kalibrationsvorrichtung oder andersherum. Darüber hinaus gibt es Verfahren, die eine digitale Verrechnung bzw. Korrektur ermöglichen, wenn eine Fehlausrichtung ermittelt wurde.

Diese Verfahren können aufwendig und außerdem anfällig für Anwenderfehler sein.

Aufgabe der Erfindung ist es daher, ein Verfahren und ein System bereitzustellen, das die oben beschriebenen Nachteile nicht oder nur in vermindertem Umfang aufweist.

Zur Lösung der Aufgabe werden ein Verfahren sowie ein System gemäß den unabhängigen Ansprüchen vorgeschlagen.

Ein erster Aspekt der Erfindung betrifft ein Verfahren zum Ermitteln einer Ausrichtung eines Fahrzeugs in Bezug auf eine Fahrzeug-Kalibrations-Vorrichtung und weist die folgenden Schritte auf:
Messen einer ersten Druckverteilung, die ein erstes Rad des Fahrzeugs auf einer ersten Messfläche erzeugt und Ermitteln einer Ausrichtung des ersten Rades und/oder des Fahrzeugs auf Grundlage der Druckverteilung des Rades.

Unter einer Druckverteilung kann im Rahmen dieser Offenbarung der Druck verstanden werden, den das Rad insbesondere im Bereich der Radaufstandsfläche an unterschiedlichen Positionen einer Fläche, insbesondere der Messfläche, ausübt. Dazu werden Druckwerte des Drucks an unterschiedlichen Positionen der Messfläche erfasst. Die unterschiedlichen Positionen, an denen der Druck gemessen wird, können sich insbesondere unter dem Rad befinden, also im Bereich der Radaufstandsfläche (Reifenaufstandsfläche). Dem Fachmann ist klar, dass der verwendete Begriff "Rad" den Begriff "eines Reifens" einschließt. Wo also in der vorliegenden Schrift der Begriff "Rad" offenbart ist, kann damit auch Reifen gemeint sein. Im Allgemeinen können die Druckwerte angeben, wie groß der Druck ist, also beispielsweise wie viel Kraft das Rad an der jeweiligen Stelle ausübt. Die Druckwerte können alternativ oder ergänzend auch angeben, ob ein Druck an der jeweiligen Position überhaupt erzeugt wird oder nicht, also ja/ nein binäre Druckwerte. Druckwerte können auch angeben, ob der gemessene Druck über einem bestimmten Schwellenwert liegt oder nicht.

Die Messfläche kann dabei einen Teil einer Bodenebene bilden oder parallel zur Bodenebene angeordnet sein. Die Bodenebene kann beispielsweise durch einen Werkstattboden gebildet sein. Die Messfläche kann dabei insbesondere flexibel ausgestaltet sein, sodass der Druck, den das Rad an einer Position der Messfläche ausübt, den Druckwert an einer anderen Stelle nicht oder nur möglichst wenig beeinflusst. Die Messfläche kann beispielsweise durch eine Positionsmessmatte, wie sie weiter unten beschrieben wird, gebildet werden.

Auf Grundlage der gemessenen Druckverteilung kann dann die Ausrichtung des Rades ermittelt werden. Unter einer Ausrichtung des Rades des Fahrzeugs kann insbesondere die Laufrichtung des Rades angesehen werden. Die Laufrichtung kann dabei eine Richtung sein, die parallel zur Bodenebene und senkrecht zur Drehachse des Rades verläuft. Die Laufrichtung kann beispielsweise eine Schnittlinie sein, die eine Ebene, die senkrecht zur Drehachse angeordnet ist, mit der Bodenebene bildet. Mit dem vorgeschlagenen Verfahren kann also beispielsweise eine Ausrichtung der Laufrichtung eines Rades zur Fahrzeug-Kalibrationsvorrichtung ermittelt werden. Dabei kann beispielsweise ein Winkel zwischen der Laufrichtung eines Rades des Fahrzeugs und einer Vorzugsrichtung der Kalibrationsvorrichtung ermittelt werden.

Alternativ oder ergänzend kann auf Grundlage der Druckverteilung, insbesondere aus der Druckverteilung oder Ausrichtung zweier Rädern oder aus den Druckverteilungen eines Rades, die zu unterschiedlichen Zeitpunkten gemessen wurden, die Ausrichtung des Fahrzeugs ermittelt werden. Unter der Ausrichtung des Fahrzeugs kann beispielsweise die Ausrichtung einer Symmetrieachse des Fahrzeugs, oder die Ausrichtung der Fahrtrichtung bzw. die Ausrichtung der geometrischen Fahrachse des Fahrzeugs angesehen werden. Mit dem vorgeschlagenen Verfahren kann also beispielsweise ein Winkel zwischen der Fahrtrichtung des Fahrzeugs und einer Vorzugsrichtung der Fahrzeug-Kalibrationsvorrichtung ermittelt werden.

Alternativ oder ergänzend zur Ausrichtung des Rades kann ebenfalls der Schwerpunkt der Druckverteilung ermittelt werden. Der Schwerpunkt der Druckverteilung eignet sich dazu, die Position des Rades zu ermitteln. Der Schwerpunkt kann mit den dem Fachmann bekannten üblichen Verfahren der Schwerpunktbildung zweidimensionaler Daten gebildet werden. Die Fahrzeug-Kalibrationsvorrichtung kann dadurch bezüglich der Position des Fahrzeugs angeordnet werden.

Das Verfahren kann in manchen Ausführungsformen weiter den Schritt aufweisen: Bestimmen eines Umrisses einer Aufstandsfläche des ersten Rades aus der gemessenen Druckverteilung. Auf Grundlage des Umrisses lässt sich beispielsweise die Ausrichtung des Rades ermitteln.

Alternativ oder ergänzend kann das Verfahren in einigen Ausführungsformen, weiter die folgenden Schritte aufweisen:
Messen einer frühen ersten Druckverteilung des ersten Rades des Fahrzeugs auf der ersten Messfläche; Rollen des Rades auf der ersten Messfläche; Messen einer späten ersten Druckverteilung des ersten Rades des Fahrzeugs auf der ersten Messfläche; und Bestimmen einer Fahrtrichtung des Fahrzeugs auf Grundlage der gemessenen frühen ersten Druckverteilung und der gemessenen späten ersten Druckverteilung.

Das bedeutet, dass eine frühe Druckverteilung zum Zeitpunkt t1 gemessen wird, das Rad anschließend auf der ersten Messfläche entlang seiner Laufrichtung auf der ersten Messfläche rollt und daran anschließend zu einem zweiten Zeitpunkt t2, wobei t2>t1, eine Messung einer späteren Druckverteilung durchgeführt wird. Aus dem Vergleich der frühen und der späteren Druckverteilung kann anschließen die Fahrtrichtung des Fahrzeugs ermittelt werden. Die Fahrtrichtung kann in weiteren Verfahrensschritten als Vorzugsrichtung zur Kalibration der Fahrerassistenzsysteme verwendet werden. Die Fahrtrichtung kann beispielsweise auf Grundlage des Schwerpunkts der frühen Druckverteilung und des Schwerpunkts der späten Druckverteilung gebildet werden. Auf Grundlage dieser beiden Schwerpunkte kann beispielsweise ein Richtungsvektor ermittelt werden, der der Fahrtrichtung des Fahrzeugs entspricht.

In einigen Ausführungsformen kann das Verfahren alternativ oder ergänzend die folgenden Schritte aufweisen:
Messen einer zweiten Druckverteilung, die ein zweites Rad des Fahrzeugs auf einer zweiten Messfläche erzeugt, und
Bestimmen einer Ausrichtung der beiden Räder auf Grundlage der ersten Druckverteilung und der zweiten Druckverteilung.

Durch die Bestimmung der Ausrichtung zweier Räder der spurgebenden Achse, lässt sich die geometrische Fahrachse, bzw. die Fahrtrichtung des Fahrzeugs bestimmen. Die Fahrzeug-Kalibrationsvorrichtung kann anschließend auf Grundlage der ermittelten Fahrtrichtung des Fahrzeugs ausgerichtet werden. Im Allgemeinen kann beispielsweise eine Kalibriertafel einer Fahrzeug-Kalibrationsvorrichtung derart ausgerichtet werden, dass sie einen bestimmten Winkel, beispielsweise 90°, mit der Fahrtrichtung des Fahrzeugs einschließt.

Das Verfahren kann dabei ergänzend den folgenden Schritt aufweisen: Ermitteln einer Position und/oder einer Ausrichtung und/oder einer Fahrtrichtung des Fahrzeugs auf Grundlage der ersten Druckverteilung und der zweiten Druckverteilung. Die Position des Fahrzeugs kann beispielsweise dazu verwendet werden, einen Abstand zwischen Fahrzeug-Kalibrationsvorrichtung und Fahrzeug einzustellen.

In einigen Ausführungsformen des Verfahrens kann das Messen der ersten Druckverteilung das Erfassen des Drucks, den das erste Rad an zumindest vier Messpunkten der ersten Messfläche erzeugt, umfassen. In manchen Ausführungsformen ist zumindest einer der Messpunkte unterhalb des Rades angeordnet. Dies ermöglicht eine zuverlässige Vermessung der Druckverteilung, die das Rad auf der Messfläche generiert.

In manchen Ausführungsformen des Verfahrens kann das Messen der ersten Druckverteilung den folgenden Schritt umfassen:
Erfassen des Drucks, den das erste Rad an einer Vielzahl von Messpunkten der ersten Messfläche erzeugt, wobei
der Abstand eines Messpunkts zu seinem nächsten benachbarten Messpunkt vorzugsweise größer als 1 cm, besonders bevorzugt größer als 2 cm und/oder vorzugsweise kleiner als 5 cm, besonders bevorzugt kleiner als 4 cm ist. Die Messpunkte können beispielsweise in einem Raster angeordnet sein.

Alternativ oder ergänzend kann das Messen der ersten Druckverteilung die folgenden Schritte umfassen:
Erfassen des Drucks, den das erste Rad entlang einer ersten auf der Messfläche verlaufenden Messlinie erzeugt; und
Erfassen des Drucks, den das erste Rad entlang einer zweiten auf der Messfläche verlaufenden Messlinie erzeugt;
wobei die erste Messlinie und die zweite Messlinie winklig zueinander angeordnet sind, vorzugsweise in einem Winkel von 90°. Dabei kann beispielsweise auch die Summe aller Drücke, die entlang der jeweiligen Messlinie erzeugt werden, erfasst werden. In einigen Ausführungsformen kann auch das Maximum der Drücke, die entlang der jeweiligen Messlinie erzeugt werden, erfasst werden.

In weiteren Ausführungsformen kann das Messen der ersten Druckverteilung die folgenden Schritte umfassen:
Erfassen der Drücke, die das erste Rad jeweils entlang einer Vielzahl von ersten Messlinien erzeugt; wobei die ersten Messlinien parallel zueinander verlaufen; und
Erfassen der Drücke, die das erste Rad jeweils entlang einer Vielzahl von zweiten Messlinien erzeugt; wobei die zweiten Messlinien parallel zueinander verlaufen.

In weiteren Ausführungsformen des Verfahrens kann eine kontinuierliche Druckverteilung durch Interpolation diskreter Messwerte generiert werden. Dadurch kann beispielsweise die Anzahl der Datenpunkte der Druckverteilung erhöht werden.

Gemäß einem weiteren Aspekt wird ein System zum Durchführen des vorangehend beschriebenen Verfahrens vorgeschlagen, wobei das System aufweist:
- eine Positionsmessmatte mit Druckbestimmungsmitteln, zum Messen von Drücken, die ein erstes Rad des Fahrzeugs auf der Positionsmessmatte erzeugt;
- einen ersten Prozessor, der dazu eingerichtet ist
   - eine Druckverteilung aus den Drücken, die die Druckbestimmungsmittel der Positionsmatte messen, zu erzeugen; und
   - eine Ausrichtung des ersten Rades des Fahrzeugs auf Grundlage der Druckverteilung zu ermitteln.

Dass der Prozessor eine Druckverteilung erzeugt, bedeutet in diesem Zusammenhang, dass der Prozessor die Drücke, die die jeweiligen Druckbestimmungsmittel messen, mit den Positionen, an denen die Druckbestimmungsmittel angeordnet sind, verknüpft.

Die Positionsmessmatte kann beispielsweise eine flexible Messoberfläche aufweisen. Die Positionsmessmatte kann beispielsweise eine Höhe von mehr als 5 mm, oder mehr als 10 mm aufweisen und/oder eine Höhe von weniger als 50 mm oder weniger als 40 mm aufweisen. Die Positionsmessmatte kann beispielsweise rechteckig sein und eine Breite von mehr als 300 mm oder mehr als 400 mm aufweisen und/oder eine Länge von mehr als 600 mm oder mehr als 800 mm aufweisen.

In manchen Ausführungsformen weist das System eine Fahrzeug-Kalibrations-vorrichtung auf, wobei der Prozessor vorzugsweise weiter dazu eingerichtet ist, eine Position des ersten Rades des Fahrzeugs auf Grundlage der Druckverteilung zu ermitteln und die Fahrzeug-Kalibrationsvorrichtung anhand der ermittelten Position und/oder Ausrichtung des Fahrzeugs einstellbar ist. Einstellbar kann hier beispielsweise bedeuten, dass die Fahrzeug-Kalibrationsvorrichtung verschiebbar ist, oder beispielsweise elektronisch einstellbar ist.

In manchen Ausführungsformen des Systems weisen die Druckbestimmungsmittel auf:
- Fluid-gefüllte kompressible Kanäle, die in die Positionsmessmatte integriert sind und parallel zu einer Messoberfläche verlaufen, wobei jeder kompressible Kanal einen Drucksensor zum Messen des Drucks des Fluids im Kanal aufweist; und/oder
- Lichtleiter, die in die Positionsmessmatte integriert sind und parallel zur Messoberfläche verlaufen, wobei jeder Lichtleiter eine Transmissionsmessvorrichtung zum Bestimmen einer Transmission des Lichtleiters aufweist; und/oder
- eine Vielzahl von Stempeln, die in senkrechter Richtung zur Messoberfläche verschiebbar angeordnet sind und dazu ausgebildet sind, durch Druckausübung auf die Messoberfläche verschoben zu werden, und weiter aufweisend Stempelbestimmungsmittel, zur Bestimmung einer Position eines Stempels, der durch Druckausübung auf die Messoberfläche verschoben wurde.

Fluid bedeutet in diesem Zusammenhang mit einem Gas oder einer Flüssigkeit gefüllt. Die Kanäle können beispielsweise mit Luft gefüllt sein und/oder fluiddicht verschlossen sein, sodass das Fluid nicht entweichen kann.

Alternativ oder ergänzend weisen die Druckbestimmungsmittel mehrere Drucksensoren auf, die vorzugsweise in regelmäßigen Abständen zueinander angeordnet sind, wobei zumindest bereichsweise der Abstand eines Drucksensors zu seinem nächsten benachbarten Drucksensor vorzugsweise größer als 1 cm, besonders bevorzugt größer als 2 cm und/oder vorzugsweise kleiner als 5 cm, besonders bevorzugt kleiner als 4 cm ist.

In weiteren Ausführungsformen des Systems weist das System zumindest eine zweite Positionsmessmatte mit Druckbestimmungsmitteln, zum Messen von Drücken, die ein zweites Rad des Fahrzeugs auf der zweiten Positionsmessmatte erzeugt. Weiter kann das System eine dritte Positionsmessmatte zum Messen von Drücken, die ein drittes Rad auf der dritten Positionsmessmatte erzeugt. Weiter kann das System eine vierte Positionsmessmatte zum Messen von Drücken, die ein viertes Rad auf der vierten Positionsmessmatte erzeugt. Im Allgemeinen kann jede Positionsmessmatte auch dazu ausgebildet sein, die Drücke von mehreren Rädern zu messen.

Die Positionsmessmatten können form- und/oder kraftschlüssig miteinander verbindbar, insbesondere lösbar verbindbar sein. Dabei können die Abstände der Positionsmessmatten relativ zueinander fest oder festgelegt sein. Das System kann also modular aufgebaut sein. Dadurch kann das System beispielsweise flexibel einsetzbar sein und beispielsweise auch ein transportables System realisiert werden. Während für manche Anwendungen ein System mit mehreren Positionsmessmatten von Vorteil ist kann in manchen Anwendungsfällen ein System mit einer einzigen, also genau einer, Positionsmessmatte vorteilhaft sein. Die oben genannten Positionsmatten bzw. nachstehend genannten Positionsmatten (erste, zweite, dritte, vierte) können dann integrale Bestandteile dieser einzigen Positionsmessmatte bilden.

Nachfolgend werden beispielhaft einige Kombinationen genannt, die für das System vorgesehen sein können. Das System kann beispielsweise eine Positionsmessmatte aufweisen, wobei die Positionsmatte derart angeordnet und ausgebildet ist, dass die Positionsmessmatte die Druckverteilung von zwei, oder drei oder vier Rädern eines Fahrzeugs erfassen kann. Das System kann beispielsweise zwei Positionsmessmatten aufweisen, wobei die Positionsmatten derart angeordnet und ausgebildet sind, dass jede der Positionsmessmatten jeweils die Druckverteilung zweier Räder eines Fahrzeugs erfassen kann. Das System kann beispielsweise drei Positionsmessmatten aufweisen, wobei die Positionsmatten derart angeordnet und ausgebildet sind, dass zwei der Positionsmessmatten jeweils die Druckverteilung eines Rades eines Fahrzeugs können und eine der Positionsmessmatte die Druckverteilung von zwei Rädern jenes Fahrzeugs erfassen kann. Das System kann beispielsweise vier Positionsmessmatten aufweisen, wobei die Positionsmatten derart angeordnet und ausgebildet sind, dass jede der Positionsmessmatten jeweils die Druckverteilung eines Rades eines Fahrzeugs erfassen kann.

Die Erfindung soll nachfolgend anhand von Figuren erläutert werden.

Dabei zeigt
- Fig. 1: eine erste Ausführungsform eines Systems zum Ermitteln einer Ausrichtung eines Fahrzeugs in Draufsicht.
- Fig. 2: eine zweite Ausführungsform eines Systems zum Ermitteln einer Ausrichtung eines Fahrzeugs sowie ein Fahrzeug in Draufsicht.
- Fig. 3: eine dritte Ausführungsform eines Systems zum Ermitteln einer Ausrichtung eines Fahrzeugs sowie ein Fahrzeug in Draufsicht.
- Fig. 4: eine erste Ausführungsform einer Positionsmessmatte.
- Fig. 5: eine zweite Ausführungsform einer Positionsmessmatte.
- Fig. 6: Beispiele für Druckverteilungen, die ein Rad eines Fahrzeugs auf einer Messfläche erzeugt.
- Fig. 7: ein Blockdiagramm mit Verfahrensschritten zum Ermitteln einer Ausrichtung eines Fahrzeugs.

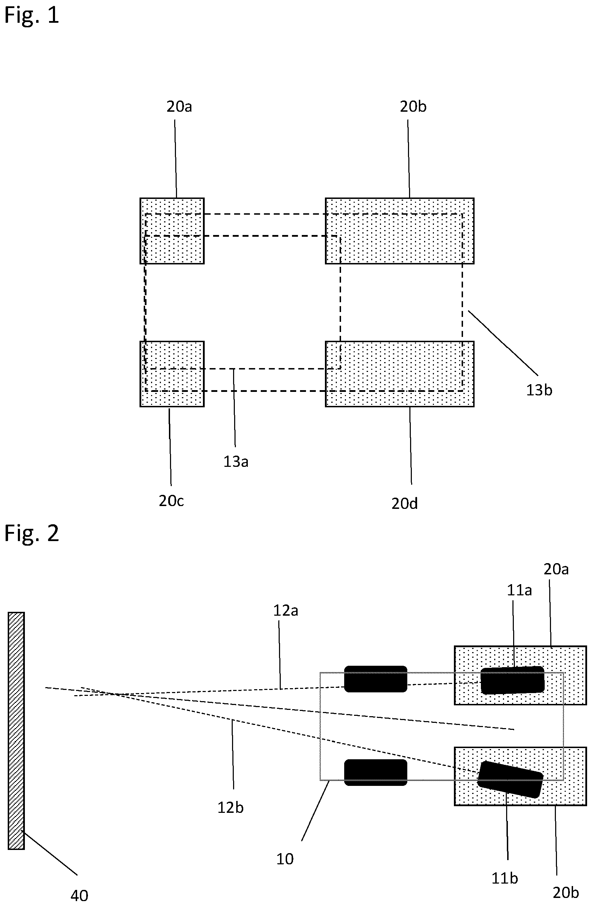

Figur 1 zeigt eine erste Ausführungsform eines Systems zum Ermitteln einer Ausrichtung eines Fahrzeugs. In dieser Ausführungsform weist das System vier Positionsmessmatten 20a, 20b, 20c, 20d auf. Die Positionsmessmatten 20a, 20b, 20c, 20d sind derart angeordnet und ausgebildet, dass jede der Positionsmessmatten 20a, 20b, 20c, 20d jeweils die Druckverteilung eines Rades 11a, 11b, 11c, 11d eines Fahrzeugs 10 erfassen kann. Die Positionsmessmatten 20a, 20b, 20c, 20d sind dabei jeweils an einer Ecke eines Rechtecks angeordnet. Zwei der Positionsmessmatten 20b, 20d, die gemeinsam an einer kurzen Seite des Rechtecks angeordnet sind, können dabei flächenmäßig größer sein als die anderen beiden Positionsmessmatten 20a, 20c. Die flächenmäßig größeren Positionsmessmatten 20b, 20c können dabei insbesondere in Fahrtrichtung länger sein, als die flächenmäßig kleineren Positionsmessmatten 20a, 20d.

In Figur 1 sind die Umrisse 13a, 13b unterschiedlich großer Fahrzeugtypen angedeutet. Es wird deutlich, dass in der gezeigten Anordnung der Positionsmessmatten sowohl Fahrzeuge 13a mit vergleichsweise kurzem Radstand und Fahrzeuge 13b mit einem vergleichsweise großen Radstand mit einem einzigen System vermessen werden können. Es sind auch Systeme möglich, in denen die gesamte Fläche des Rechtecks als eine einzelne Positionsmessmatte ausgebildet ist.

Figur 2 zeigt eine weitere Ausführungsform eines Systems, das zum Durchführen des Verfahrens ausgebildet ist. In dieser Ausführungsform weist das System zwei Positionsmessmatten 20a, 20b auf. Die Positionsmessmatten 20a, 20b sind derart angeordnet und ausgebildet, dass jede der Positionsmessmatten 20a, 20b jeweils die Druckverteilung eines Rades 11a, 11b eines Fahrzeugs 10 erfassen kann. Auf Grundlage der gemessenen Druckverteilung des Rades 11a, 11b kann die Ausrichtung 12a, 12b des Rades ermittelt werden. Dazu kann beispielsweise ein Prozessor die Drücke, die Druckbestimmungsmittel in der Positionsmessmatte 20a, 20b messen, verwenden und eine Druckverteilung erzeugen. Weiter kann aus der Druckverteilung die Ausrichtung 12a, 12b des jeweiligen Rades 11a, 11b ermittelt werden. Dies kann ebenfalls durch einen Prozessor erfolgen, der entsprechend eingerichtet ist.

Die Ausrichtung 12a, 12b des Rades 11a, 11b ist dabei die Richtung, die parallel zur Bodenebene und senkrecht zur Drehachse des Rades verläuft. Durch die Ausrichtung 12a, 12b der Räder der spurgebenden Achse, wird die Fahrtrichtung des Fahrzeugs bei Geradeausfahrt festgelegt. Dabei entspricht die Fahrtrichtung bzw. die geometrische Fahrachse der Winkelhalbierenden der beiden Ausrichtungen 12a, 12b der Räder 11a, 11b. In manchen Ausführungsformen kann also aus der Druckverteilung zweier Räder 11a, 11b die geometrische Fahrachse des Fahrzeugs 10 bestimmt werden. Auf diese Weise kann eine Fahrzeug-Kalibrationsvorrichtung 40 bezüglich der geometrischen Fahrachse des Fahrzeugs 10 ausgerichtet werden. In einigen Ausführungsformen kann es allerdings auch ausreichend sein, die Fahrzeug-Kalibrationsvorrichtung 40 lediglich in Bezug auf die Ausrichtung eines Rades auszurichten. Die Fahrzeug-Kalibrationsvorrichtung 40 kann beispielsweise eine Kalibriertafel mit einem aufgedruckten Kalibriertarget aufweisen oder daraus bestehen. Die Fahrzeug-Kalibrationsvorrichtung 40 kann derart ausgerichtet werden, dass sie einen bestimmten Winkel, beispielsweise 90°, mit der Fahrtrichtung des Fahrzeugs oder einer anderen Vorzugsrichtung, beispielsweise eine Symmetrieachse, des Fahrzeugs einschließt.

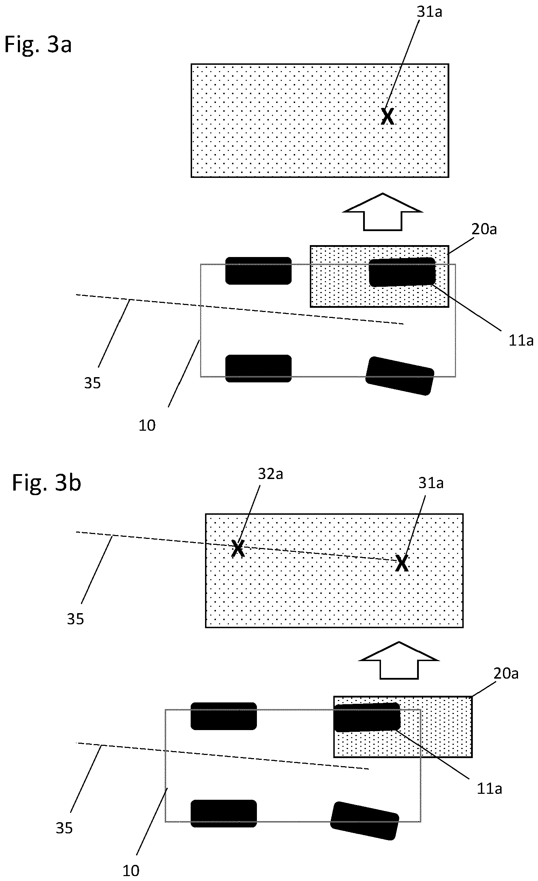

Figur 3a zeigt das Messen einer frühen ersten Druckverteilung des ersten Rades 11a des Fahrzeugs 10 auf der ersten Messfläche 20a. Figur 3b zeigt das Messen einer späten ersten Druckverteilung des ersten Rades 11a des Fahrzeugs 10 auf derselben Messfläche 20a, nachdem das Rad 11a auf der ersten Messfläche 20a gerollt wurde. Dabei kann die Fahrtrichtung 35 des Fahrzeugs 10 auf Grundlage der frühen ersten Druckverteilung und der späteren ersten Druckverteilung bestimmt werden. In Figuren 3a und 3b wird beispielsweise der Schwerpunkt 31a, 32a der beiden Druckverteilungen bestimmt und anschließend durch Verbinden der beiden Schwerpunkte 31a, 32a die Fahrtrichtung 35 des Fahrzeugs 10 bestimmt.

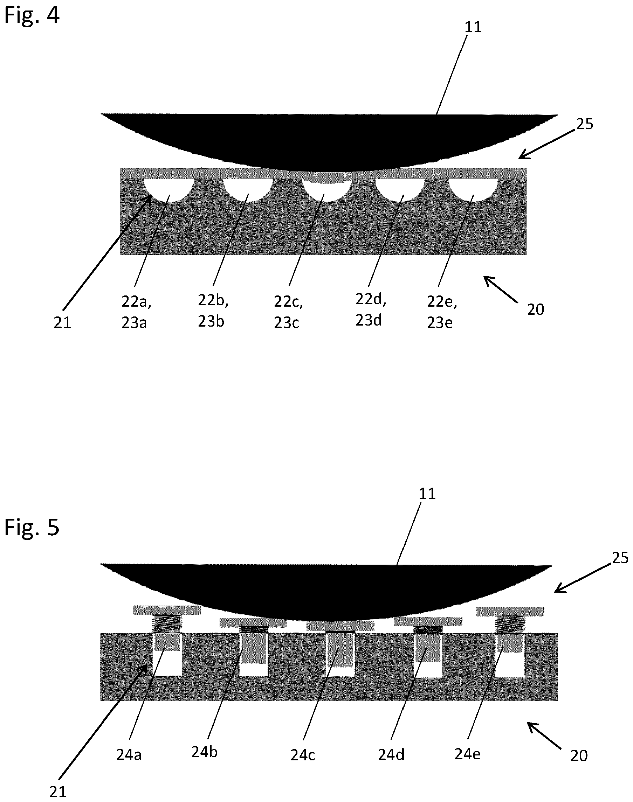

Figur 4 zeigt einen Ausschnitt einer Schnittansicht einer ersten Ausführungsform einer Positionsmessmatte 20 mit Druckbestimmungsmitteln 21. Die Positionsmessmatte 20 weist in dieser Ausführungsform fluid-gefüllt Kanäle 22a, 22b, 22c, 22d, 22e auf. Jeder fluid-gefüllte Kanal 22a, 22b, 22c, 22d, 22e bildet ein geschlossenes Volumen, sodass Fluid innerhalb des fluid-gefüllten Kanals 22a, 22b, 22c, 22d, 22e nicht entweichen kann. Die fluid-gefüllten Kanäle 22a, 22b, 22c, 22d, 22e verlaufen senkrecht zur Schnittebene der Figur 4. In der dargestellten Ausführungsform verlaufen alle fluid-gefüllten Kanäle 22a, 22b, 22c, 22d, 22e parallel zu einander. Es sind allerdings auch Ausführungsform möglich, in denen die fluid-gefüllten Kanäle 22a, 22b, 22c, 22d, 22e einander kreuzen. Dabei können beispielsweise zwei Sätze von fluid-gefüllten Kanälen 22a, 22b, 22c, 22d, 22e vorgesehen sein, wobei die Kanäle des einen Satzes die Kanäle des anderen Satzes kreuzen. Dabei können alle Kanäle eines Satzes jeweils zueinander parallel verlaufen. Die Kanäle des einen Satzes können sind dabei in einer anderen horizontalen Ebene angeordnet als die Kanäle des anderen Satzes.

Die Positionsmessmatte 20 weist eine Messoberfläche 25 auf, die dem zu vermessenden Rad 11 zugewandt ist. Die Messoberfläche 25 ist typischerweise horizontal ausgerichtet. In den meisten Ausführungsformen verlaufen die fluid-gefüllten Kanäle 22a, 22b, 22c, 22d, 22e parallel zu dieser Messoberfläche 25.

Das Rad 11 übt auf der Fläche, auf der das Rad 11 die Messoberfläche 25 berührt, einen Druck auf die Positionsmessmatte 20 aus. Dabei können einige der fluid-gefüllten Kanäle 22a, 22b, 22c, 22d, 22e deformiert, insbesondere komprimiert, werden. Durch die Deformation der fluidgefüllten Kanäle 22a, 22b, 22c, 22d, 22e kann sich der Druck innerhalb des fluid-gefüllten Kanals 22a, 22b, 22c, 22d, 22e ändern. Die Positionsmessmatte 20 weist Drucksensoren auf, die es ermöglichen diese Druckänderung in den fluid-gefüllten Kanälen 22a, 22b, 22c, 22d, 22e zu erfassen. Die Drucksensoren sind in Figur 4 nicht gezeigt. Die Positionsmessmatte 20 kann beispielsweise für jeden der fluid-gefüllten Kanäle 22a, 22b, 22c, 22d, 22e jeweils einen Drucksensor aufweisen. Dabei können die fluid-gefüllten Kanäle und die Drucksensoren die Druckbestimmungsmittel 21 bilden.. Die Drucksensoren können in manchen Ausführungsformen außerhalb der Matte angeordnet sein und fluidisch mit den jeweiligen fluid-gefüllten Kanälen 22a, 22b, 22c, 22d, 22e verbunden sein.

Als Alternative oder Ergänzung können Lichtleiter 23a, 23b, 23c, 23d, 23e vorgesehen sein, die wie die zuvor beschriebenen fluid-gefüllten Kanäle 22a, 22b, 22c, 22d, 22e in der Positionsmessmatte 20 angeordnet sein können. Die Lichtleiter 23a, 23b, 23c, 23d, 23e können jeweils eine Transmissionsmessvorrichtung aufweisen. Dabei können die Lichtleiter 23a, 23b, 23c, 23d, 23e und die Transmissionsmessvorrichtungen die Druckbestimmungsmittel 21 bilden. Die Transmissionsmessvorrichtung kann die Transmission des jeweiligen Lichtleiters 23a, 23b, 23c, 23d, 23e bestimmen. Beispielsweise kann eine Transmissionsmessvorrichtung eine Lichtmessvorrichtung, beispielsweise eine Photodiode, aufweisen, die eine Intensität von Licht, das an einem Ende des Lichtleiters 23a, 23b, 23c, 23d, 23e austritt, misst. Zusätzlich kann die Transmissionsmessvorrichtung eine Lichterzeugungsvorrichtung, beispielsweise eine LED, aufweisen, die Licht erzeugt, dass an einem Ende des Lichtleiters 23a, 23b, 23c, 23d, 23e in den Lichtleiter 23a, 23b, 23c, 23d, 23e eintritt oder eingekoppelt wird, wobei die Lichtmessvorrichtung am gegenüberliegenden Ende des Lichtleiters 23a, 23b, 23c, 23d, 23e angeordnet ist.

Wird der Lichtleiter 23a, 23b, 23c, 23d, 23e beispielsweise durch den Druck, den ein Rad auf der Messoberfläche ausübt, deformiert, ändert sich die Transmission des Lichtleiters 23, sodass sich die Intensität des Lichts, das den Lichtleiter 23a, 23b, 23c, 23d, 23e an einem Ende verlässt, ändert. Durch Messung der Transmission der Lichtleiter 23a, 23b, 23c, 23d, 23e, beispielsweise durch Messung der Intensitäten, kann ein Druckwert erfasst werden und aus mehreren Druckwerten anschließend eine Druckverteilung erzeugt werden.

Figur 5 zeigt eine weitere Ausführungsform einer Positionsmessmatte 20. In dieser Ausführungsform weist die Positionsmessmatte 20 Stempel 24a, 24b, 24c, 24d, 24e auf. Die Stempel 24a, 24b, 24c, 24d, 24e sind in vertikaler Richtung verschiebbar angeordnet und können beispielsweise durch ein Rad 11, das auf der Messoberfläche 25 der Positionsmessmatte 20 positioniert ist, verschoben werden. Die Positionsmessmatte 20 kann Stempelbestimmungsmittel aufweisen, die dazu eingerichtet sind, eine Position eines Stempels 24a, 24b, 24c, 24d, 24e, der durch das Rad 11 verschoben wurde, zu bestimmen. Auf diese Weise kann die Druckverteilung, die ein Rad 11 des Fahrzeugs 10 auf der Messoberfläche 25 erzeugt, gemessen werden.

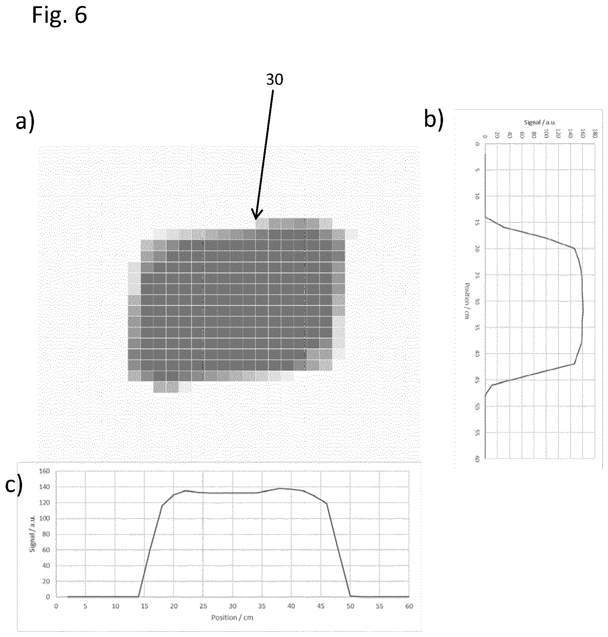

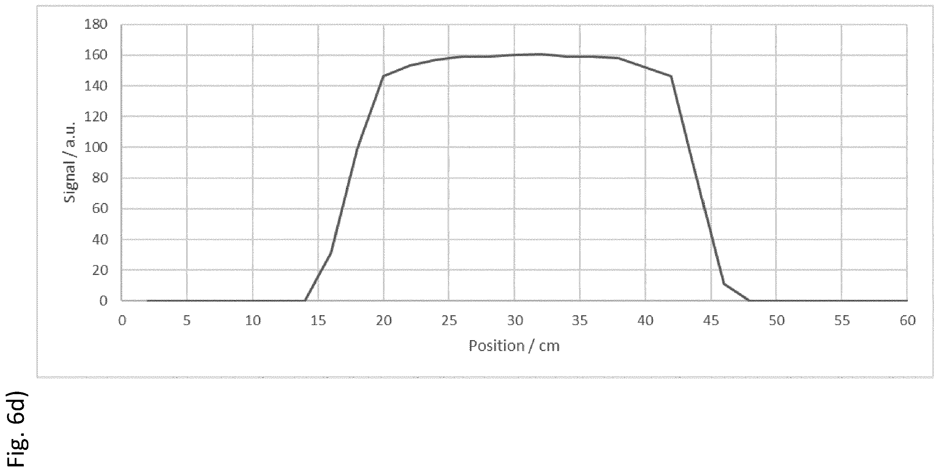

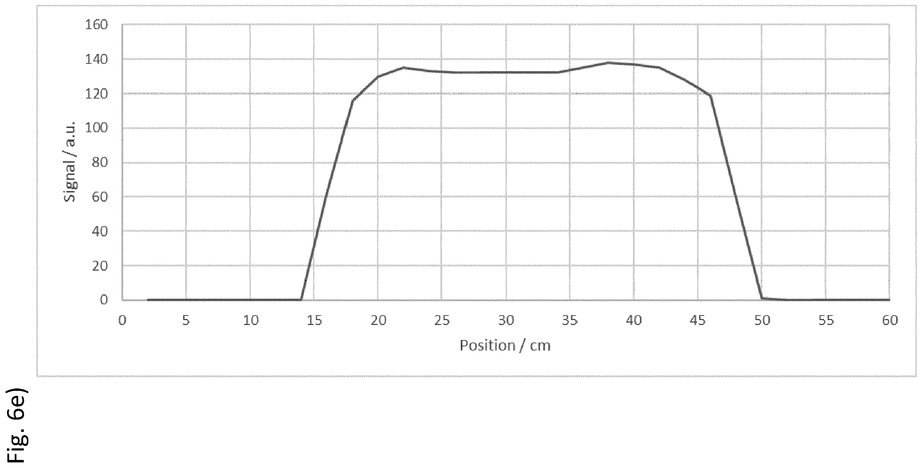

Figur 6 zeigt mehrere Beispiele für Druckverteilungen, die ein Rad 11 des Fahrzeugs 10 auf einer Messfläche erzeugt.

Figur 6a zeigt beispielsweise eine Druckverteilung 30, bei der Druck den das Rad 11 an einer Vielzahl von Messpunkten der Messfläche 25 erzeugt, erfasst wird. Die Messpunkte sind dabei in einem Raster angeordnet. Jeder Messpunkt kann dabei durch einen Pixel dargestellt werden. Der jeweils gemessene Druck wird durch die Farbe des jeweiligen Pixels dargestellt. Je dunkler die Farbe des Pixels, desto stärker ist der Druck, der an der Position, die dem Pixel entspricht, erzeugt wird. Es ist beispielsweise zu erkennen, dass diese Druckverteilung 30 nach rechts oben geneigt ist. Die Ausrichtung des Rades 11 kann beispielsweise auf Grundlage der Symmetrieachse und/oder auf Grundlage des Umrisses der Druckverteilung 30 bestimmt werden. Anstatt eines Druckwertes des Drucks der an einem Messpunkt erzeugt wird, kann zur Erzeugung der Druckverteilung auch ein Wert angegeben werden, der angibt ob ein Druck erzeugt wird oder nicht, bzw. ob ein Druck, über oder unter einem bestimmtem Schwellenwert liegt.

Die Figuren 6b,d und 6c,e zeigen beispielsweise Druckverteilungen, bei denen der Druck erfasst wurde, den das Rad 11 jeweils entlang einer auf der Messfläche 25 verlaufenden Messlinie erzeugt. Figur 6b zeigt beispielsweise Druckwerte, die entlang von Messlinien erzeugt wurden, die in Figur 6a von links nach rechts verlaufen. Die Figur 6b kann also beispielsweise einer Projektion der Druckverteilung 30 auf eine vertikale Achse der Figur 6a entsprechen. Figur 6c zeigt beispielsweise Druckwerte, die entlang von Messlinien erzeugt wurden, die in Figur 6a von oben nach unten verlaufen. Die Figur 6c kann also beispielsweise einer Projektion der Druckverteilung 30 auf die horizontale Achse der Figur 6a entsprechen. Es kann beispielsweise das Maximum des entlang der Messlinie gemessenen Drucks bestimmt werden oder beispielsweise die Summe aller Drücke entlang der Messlinie bestimmt werden. Das bedeutet beispielsweise, dass jeder Messwert in der Figur 6b, dem Maximum oder der Summe der Druckwerte entspricht, die entlang einer von links nach rechts verlaufenden Messlinie gemessen werden. Gleiches gilt für die Messwerte der Figur 6c mit von oben nach unten verlaufenden Messlinien. In manchen Ausführungsformen kann auch bestimmt werden, ob ein Druck, der entlang einer Messlinie erzeugt wird, über einem bestimmten Schwellenwert liegt oder nicht. Figur 6d zeigt eine vergrößerte Darstellung der Figur 6b. Figur 6e zeigt eine vergrößerte Darstellung der Figur 6c.

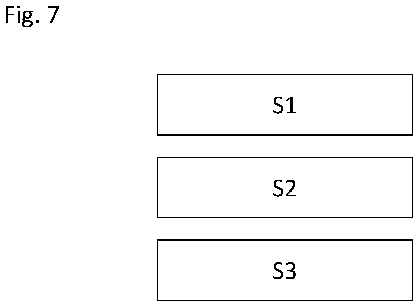

Figur 7 zeigt ein Blockdiagramm mit Verfahrensschritten zum Ermitteln einer Ausrichtung eines Fahrzeugs. Dabei wird in einem ersten Schritt S1 eine erste Druckverteilung, die ein erstes Rad 11 des Fahrzeugs 10 auf einer ersten Messfläche 25 erzeugt gemessen. In einem zweiten Schritt wird eine Ausrichtung des ersten Rades 11 oder des Fahrzeugs 10, beispielsweise die Fahrtrichtung des Fahrzeugs 10, auf Grundlage der Druckverteilung des Rades 11 ermittelt. In einem weiteren Verfahrensschritt kann die Fahrzeug-Kalibrationsvorrichtung auf Grundlage der Ausrichtung des ersten Rades 11 oder des Fahrzeugs 10 angeordnet werden.

### Bezugszeichenliste:

- 10: Fahrzeug
- 11a: erstes Rad
- 11b: zweites Rad
- 11c: drittes Rad
- 11d: viertes Rad
- 12a: Ausrichtung des ersten Rades
- 12b: Ausrichtung des zweiten Rades
- 13a: Umriss kleines Fahrzeug
- 13b: Umriss großes Fahrzeug
- 20a: Positionsmessmatte
- 20b: Positionsmessmatte
- 20c: Positionsmessmatte
- 20d: Positionsmessmatte
- 21: Druckbestimmungsmittel
- 22a-e: fluid-gefüllter Kanal
- 23a-e: Lichtleiter
- 24a-e: Stempel
- 25: Messoberfläche
- 30: Druckverteilung
- 31a: Position des ersten Rades
- 32a: spätere Position des ersten Rades
- 35: Fahrtrichtung
- 40: Fahrzeug-Kalibrationsvorrichtung

## Patentansprüche

1. Verfahren zum Ermitteln einer Ausrichtung eines Fahrzeugs (10) in Bezug auf eine Fahrzeug-Kalibrationsvorrichtung (40), aufweisend die Schritte:
Messen einer ersten Druckverteilung (30), die ein erstes Rad (11a) des Fahrzeugs (10) auf einer ersten Messfläche (20a) erzeugt;
Ermitteln einer Ausrichtung (12a) des ersten Rades (11a) und/oder des Fahrzeugs (10) auf Grundlage der Druckverteilung (30) des Rades.

2. Verfahren nach dem vorangehenden Anspruch, weiter aufweisend den Schritt:
Bestimmen eines Umrisses einer Aufstandsfläche des ersten Rades (11a) aus der gemessenen Druckverteilung (30).

3. Verfahren nach einem der vorangehenden Ansprüche, weiter aufweisend die Schritte:
Messen einer frühen ersten Druckverteilung des ersten Rades (11a) des Fahrzeugs (10) auf der ersten Messfläche (20a);
Rollen des Rades (11a) auf der ersten Messfläche;
Messen einer späten ersten Druckverteilung des ersten Rades (11a) des Fahrzeugs (10) auf der ersten Messfläche (20a);
Bestimmen einer Fahrtrichtung des Fahrzeugs (10) auf Grundlage der gemessenen frühen ersten Druckverteilung und der gemessenen späten ersten Druckverteilung.

4. Verfahren nach einem der vorangehenden Ansprüche, weiter aufweisend die Schritte,
Messen zumindest einer zweiten Druckverteilung, die ein zweites Rad (11b) des Fahrzeugs (10) auf einer zweiten Messfläche erzeugt, und
Bestimmen einer Ausrichtung (12a, 12b) der beiden Räder (11a, 11b) auf Grundlage der ersten Druckverteilung (30a) und der zweiten Druckverteilung (30b).

5. Verfahren nach dem vorangehenden Anspruch, weiter aufweisend den Schritt:
Ermitteln einer Position und/oder Ausrichtung und/oder Fahrtrichtung des Fahrzeugs (10) auf Grundlage der ersten Druckverteilung und der zweiten Druckverteilung.

6. Verfahren nach einem der vorangehenden Ansprüche, wobei das Messen der ersten Druckverteilung (30a) den folgenden Schritt umfasst:
Erfassen des Drucks, den das erste Rad (11a) an zumindest vier Messpunkten der ersten Messfläche (20a) erzeugt.

7. Verfahren nach einem der vorangehenden Ansprüche, wobei das Messen der ersten Druckverteilung den folgenden Schritt umfasst:
Erfassen des Drucks, den das erste Rad (11a) an einer Vielzahl von Messpunkten der ersten Messfläche (20a) erzeugt, wobei
der Abstand eines Messpunkts zu seinem nächsten benachbarten Messpunkt vorzugsweise größer als 1 cm, besonders bevorzugt größer als 2 cm und/oder vorzugsweise kleiner als 5 cm, besonders bevorzugt kleiner als 4 cm ist.

8. Verfahren nach einem der vorangehenden Ansprüche, wobei das Messen der ersten Druckverteilung (30a) die folgenden Schritte umfasst:
Erfassen des Drucks, den das erste Rad (11a) entlang einer ersten auf der Messfläche (20a) verlaufenden Messlinie erzeugt; und
Erfassen des Drucks, den das erste Rad (11a) entlang einer zweiten auf der Messfläche (20a) verlaufenden Messlinie erzeugt;
wobei die erste Messlinie und die zweite Messlinie winklig zueinander angeordnet sind, vorzugsweise in einem Winkel von 90°.

9. Verfahren nach dem vorangehenden Anspruch, wobei das Messen der ersten Druckverteilung (30a) die folgenden Schritte umfasst:
Erfassen der Drücke, die das erste Rad (11a) jeweils entlang einer Vielzahl von ersten Messlinien erzeugt; wobei die ersten Messlinien parallel zueinander verlaufen; und
Erfassen der Drücke, die das erste Rad (11a) jeweils entlang einer Vielzahl von zweiten Messlinien erzeugt; wobei die zweiten Messlinien parallel zueinander verlaufen.

10. Verfahren nach einem der vorangehenden Ansprüche, wobei eine kontinuierliche Druckverteilung durch Interpolation diskreter Messwerte generiert wird.

11. System ausgebildet zum Durchführen des Verfahrens nach einem der Ansprüche 1-10, aufweisend
- eine Positionsmessmatte (20a) mit Druckbestimmungsmitteln (21), zum Messen von Drücken, die ein erstes Rad (11a) des Fahrzeugs (10) auf der Positionsmessmatte (20a) erzeugt;
- einen ersten Prozessor, der dazu eingerichtet ist
- eine Druckverteilung (30a) aus den Drücken, die die Druckbestimmungsmittel (21) der Positionsmatte (20a) messen, zu erzeugen; und
- eine Ausrichtung (12a) des ersten Rades (11a) des Fahrzeugs (10) auf Grundlage der Druckverteilung (30a) zu ermitteln.

12. System nach dem vorangehenden Anspruch, weiter aufweisend eine Fahrzeug-Kalibrationsvorrichtung (40), wobei der Prozessor vorzugsweise weiter dazu eingerichtet ist, eine Position des ersten Rades (11a) des Fahrzeugs (10) auf Grundlage der Druckverteilung zu ermitteln und die Fahrzeug-Kalibrationsvorrichtung anhand der ermittelten Position und/oder Ausrichtung des Fahrzeugs (10) einstellbar ist.

13. System nach einem der beiden vorangehenden Ansprüche, wobei die Druckbestimmungsmittel (21) aufweisen:
- Fluid-gefüllte kompressible Kanäle (22a-e), die in die Positionsmessmatte (20) integriert sind und parallel zu einer Messoberfläche (25) verlaufen, wobei jeder kompressible Kanal (22a-e) einen Drucksensor zum Messen des Drucks des Fluids im Kanal aufweist; und/oder
- Lichtleiter (23a-e), die in die Positionsmessmatte (20) integriert sind und parallel zur Messoberfläche (25) verlaufen, wobei jeder Lichtleiter (23a-e) eine Transmissionsmessvorrichtung zum Bestimmen einer Transmission des Lichtleiters (23a-e) aufweist; und/oder
- eine Vielzahl von Stempeln (24a-e), die in senkrechter Richtung zur Messoberfläche (25) verschiebbar angeordnet sind und dazu ausgebildet sind, durch Druckausübung auf die Messoberfläche (25) verschoben zu werden, und weiter aufweisend Stempelbestimmungsmittel, zur Bestimmung einer Position eines Stempels (24a-e), der durch Druckausübung auf die Messoberfläche (25) verschoben wurde.

14. System nach einem der Ansprüche 11-13, wobei die Druckbestimmungsmittel (21) mehrere Drucksensoren aufweisen, die vorzugsweise in regelmäßigen Abständen zueinander angeordnet sind, wobei zumindest bereichsweise der Abstand eines Drucksensors zu seinem nächsten benachbarten Drucksensor vorzugsweise größer als 1 cm, besonders bevorzugt größer als 2 cm und/oder vorzugsweise kleiner als 5 cm, besonders bevorzugt kleiner als 4 cm ist.

15. System nach einem der Ansprüche 11-14, weiter aufweisend zumindest eine zweite Positionsmessmatte (20b) mit Druckbestimmungsmitteln (21), zum Messen von Drücken, die ein zweites Rad (11a) des Fahrzeugs (10) auf der zweiten Positionsmessmatte (20b) erzeugt.
